# EUROPEAN PATENT APPLICATION

(11) **EP 3 763 936 A1**
(43) Date of publication of application: **13.01.2021**
(21) Application number: 19198724.7
(22) Date of filing: 20.09.2019
(51) Int. Cl.: F03B 17/02

(54) **POWER GENERATING APPARATUS DRIVEN BY COMBINATION OF GRAVITY AND BUOYANCY**

(30) Priority: 11.07.2019 KR 20190083883
(71) Applicant: Choi, Jae-Yeong, Gyeongsangnam-do 52924 (KR)
(72) Inventor: Choi, Jae-Yeong, Gyeongsangnam-do 52924 (KR)
(74) Representative: Knoop, Philipp

(57) **Abstract**

Disclosed is a power generating apparatus driven by a combination of gravity and buoyancy and having a shock absorbing member in an outer elevation guider. More specifically, in a power generating apparatus driven by a combination of gravity and buoyancy to generate electrical energy, a stopper member and a shock absorbing member are installed to an upper portion of an outer elevation guider, and a shock absorbing spring is installed to a lower portion of the outer elevation guider, so that a repulsive force of an inner elevation part which is moved up by buoyancy of compressed air is absorbed by the shock absorbing member, thereby preventing the outer elevation guider and the inner elevation part from being damaged and thus using the inner elevation part in the outer elevation guider for a long time, without being failed or damaged.

## Description

### Field of the Invention

The present invention relates to a power generating apparatus driven by a combination of gravity and buoyancy and having a shock absorbing member in an outer elevation guider, and more particularly, to a power generating apparatus driven by a combination of gravity and buoyancy to generate electrical energy, in which a stopper member and a shock absorbing member are installed to an upper portion of an outer elevation guider, and a shock absorbing spring is installed to a lower portion of the outer elevation guider, so that a repulsive force of an inner elevation part which is moved up by buoyancy of compressed air is absorbed by the shock absorbing member, thereby preventing the outer elevation guider and the inner elevation part from being damaged and thus using the inner elevation part in the outer elevation guider for a long time, without being failed or damaged.

### Background of the Related Art

In general, a method for generating electric power includes thermal power using chemical energy created by burning of fossil fuel, hydroelectric power using gravitational force of falling water from a dam, and nuclear power generation using nuclear fission of uranium.

Although the energy is obtained from the thermal power, the hydroelectric power and the nuclear power generation, but the above power generating methods have some problems of limited natural resources, geographic conditions and environmental issues.

By taking depletion of natural resources, stability problems, and eco-friendly power generation into consideration, a level of dependence on the energy generated by the above power generating methods is gradually decreased, while interest in renewable energy sources like sunlight, wind, tides, geothermal heat and biomass is increasing.

The necessary energy is generated by the use of renewable energy sources like hydroelectric power plants, solar plants, wind mills, tidal power plants, and geothermal heat power plants, as natural resources, but there are some problems in that the plants cannot generate sufficiency of energy, and heavy investments are required.

Gravity force and buoyancy force are very powerful, available, reliable, affordable and clean energy sources. Also, they are natural, environmental-friendly and endless. In the past, there have been attempts to invent a mechanism/technology that generate electricity without the need for any external fuel. Some of such inventions utilize gravity and buoyancy principles to generate power. However, the power generating apparatus driven by a combination of gravity and buoyancy has a problem in that since an air discharge member installed to an upper portion of an inner elevation part abuts against a top surface of a receiving space of an outer elevation guider, the air discharge member may be worn out, damaged, and deformed in the process of reciprocating movement for a long time.

### SUMMARY OF THE INVENTION

Therefore, the present invention has been made in view of the above problems, and a first object of the present invention is to provide a power generating apparatus driven by a combination of gravity and buoyancy which continuously and stably generates electric energy by converting kinetic energy into rotational energy and transferring it to a generator, in which a stopper member is installed to an upper portion of an outer elevation guider, a shock absorbing member is installed to both sides of the stopper member, and a shock absorbing spring is installed to a lower portion of an outer elevation guider. Therefore, the upper portion of the inner elevation part which is moved up by the buoyancy of compressed air is stably fitted into the stopper member, and a repulsive force caused by the ascending upper portion of the inner elevation part is absorbed by the shock absorbing member installed to the both sides of the stopper member, thereby preventing the inner elevation part from being worn, damaged or deformed due to repeated abutment of the air discharge member installed to the upper portion of the inner elevation part against a top surface of the receiving space of the outer elevator guider for a long time. Therefore, the stable elevation of the inner elevation part can be guided in the outer elevation guider, thereby preventing the upper portion of the inner elevation part and the air discharge member installed to the upper portion thereof, which are moved up and down in the outer elevation guider, from being worn, damaged and deformed for a long time, without replacing the damaged inner elevation part.

Also, a second object of the present invention is to provide a power generating apparatus driven by a combination of gravity and buoyancy, in which a shock absorbing spring is installed to an inner lower portion of an outer elevation guider to prevent a lower portion of an inner elevation part from being damaged. Therefore, it is possible to use the inner elevation part in the outer elevation guider for a long time, without being replaced.

In addition, a third object of the present invention is to provide a power generating apparatus driven by a combination of gravity and buoyancy, in which air pressure generated by an inner elevation part which is moved up in an outer elevation guider is supplied to another inner elevation part, so that a frequency per hour of the inner elevation part which is moved up and down in the outer elevation guider is increased, thereby effectively generating the electric energy by the inner elevation part reciprocating in the outer elevation guider.

In order to achieve the above and other objects, according to one aspect of the present invention, there is provided a power generating apparatus driven by a combination of gravity and buoyancy, the power generating apparatus comprising: an outer elevation guider including a body filled with water therein and extending a longitudinal direction, a plurality of air outlet ports provided in an upper portion of the body, an air inlet port provided in a lower portion of the body, a wafer feeing port formed in a bottom surface of the body, a stopper member installed to a top surface of the body, a shock absorbing member installed to both sides of a lower portion of the stopper member, and a shock absorbing spring installed to an inner bottom surface of the body; an inner elevation part including an inner body which is immersed into the water filled in the body and is filled with air therein to be floated by the buoyancy, an air discharge member which is installed to an upper portion of the inner body to discharge air generated when the inner body abuts against an upper inner surface of the body, a coupling hose which is fitted in the air inlet port in a water tightness manner, extends in the body, and is connected to a compressor, an air inlet port formed in a lower portion of the inner body to be connected to the coupling hose, and a shock sensor installed to the lower portion of the inner body; a coupling chain with an upper portion being connected to an upper connecting portion provided on an upper portion of the inner elevation part, and a lower portion being connected to a lower connecting portion provided on a lower portion of the inner elevation part, in which a plurality of upper driving gears are driven by a driving shaft which is installed to the upper portion of the body, and a plurality of lower driving gears are driven by a driving shaft which is installed to the inner lower portion of the body, with the coupling chain passing around the upper driving gears and the lower driving gears; and a generator installed to the upper portion of the body and operating in cooperation with the upper driving gears and driving gears provided to the upper portion of the body.

The stopper member is provided with a lower seating groove and an air outlet port so that the upper portion of the inner elevation part is seated thereon.

The shock absorbing member includes a plurality of first and second shock absorbers; the first shock absorber has a left vertical support vertically installed to a left side of the body, a left support portion horizontally installed to a left side of the left vertical support, a right support portion installed to a right side of the left vertical support at a distance away from the left support portion, a piston installed to a right side of the left support portion, with a left side of the piston being fixed, a cylinder receiving the piston, of which a right side of the cylinder is fixed to the left side of the right support portion, a support spring interposed between the left support portion and the right support portion, and a shock damper installed to the right side of the right support portion; and the second shock absorber has a right vertical support vertically installed to a right side of the body, a right support portion horizontally installed to a right side of the right vertical support, a left support portion installed to a left side of the right vertical support at a distance away from the right support portion, a piston installed to a left side of the right support portion, with a right side of the piston being fixed, with piston being inserted in the cylinder, and a left side of the cylinder being fixed to the right side of the left support portion, a support spring interposed between the right support portion and the left support portion, and a shock damper installed to the left side of the left support portion.

A plurality of weights are installed to inner and outer sides of the inner body of the inner elevation part.

The air discharge member includes an opening formed in the inner body, an engaging cap with a female threaded portion which is engaged to a male threaded portion formed on an outer peripheral surface of the opening, a lifting member fitted in the opening in such a way that a lower portion of the lifting member comes in and out, a resilient spring installed on an outer peripheral surface of the lower portion of a flange which is provided on an upper portion of the lifting member, a plurality of vent holes provided to the lifting member at a position corresponding to an outer peripheral surface of a lower portion of the lifting member, a locking portion formed on a middle portion of the lifting member to be locked to a stepped portion which is formed on a lower portion of the opening, a receiving groove formed on the lower portion of the lifting member, and an O-ring fitted in the receiving groove to open or close the vent holes.

A magnet member is installed to the inner side of the lower portion of the inner body.

A first air expanding member is connected to an air outlet port formed in the upper portion of the outer elevation guider, and is connected to the air inlet port formed in the lower portion of the other outer elevation guider, and a second air expanding member is connected to the air outlet port formed in the upper portion of the other elevation guider, and is connected to the air inlet port formed in the lower portion of the outer elevation guider.

An outer engaging member with a receiving opening is fitted on an outer peripheral surface of the inner elevation part, the outer engaging member is provided with a plurality of outer wings on an outer peripheral surface thereof, a rotational shaft is rotatably engaged to an assembling hole which is formed in the respective outer wings, bearings are installed to upper and lower portions of the rotational shaft to prevent the rotation shaft from being released from the assembling hole, and a propeller is installed to the upper portion of the respective rotational shafts.

With the above configuration of the power generating apparatus driven by the combination of the gravity and the buoyancy which continuously and stably generates the electric energy by converting the kinetic energy into the rotational energy and transferring it to the generator, the stopper member is installed to the upper portion of the outer elevation guider, the shock absorbing member is installed to both sides of the stopper member, and the shock absorbing spring is installed to the lower portion of the outer elevation guider. Therefore, the upper portion of the inner elevation part which is moved up by the buoyancy of the compressed air is stably fitted into the stopper member, and the repulsive force caused by the ascending upper portion of the inner elevation part is absorbed by the shock absorbing member installed to the both sides of the stopper member, thereby preventing the inner elevation part from being worn, damaged or deformed due to the repeated abutment of the air discharge member installed to the upper portion of the inner elevation part against the top surface of the receiving space of the outer elevator guider for a long time. Therefore, the stable elevation of the inner elevation part can be guided in the outer elevation guider, thereby preventing the upper portion of the inner elevation part and the air discharge member installed to the upper portion thereof, which are moved up and down in the outer elevation guider, from being worn, damaged and deformed for a long time, without replacing the damaged inner elevation part.

Also, the shock absorbing spring is installed to the inner lower portion of the outer elevation guider to prevent the lower portion of the inner elevation part from being damaged. Therefore, it is possible to use the inner elevation part in the outer elevation guider for a long time, without being replaced.

In addition, the air pressure generated by the inner elevation part which is moved up in the outer elevation guider is supplied to another inner elevation part, so that a frequency per hour of the inner elevation part which is moved up and down in the outer elevation guider is increased, thereby effectively generating the electric energy by the inner elevation part reciprocating in the outer elevation guider.

### BRIEF DESCRIPTION OF THE DRAWINGS

FIGS. 1A and 1B are views schematically illustrating a power generating apparatus according to one embodiment of the present invention.
FIGS. 2A and 2B are views illustrating the operation of a stopper member and a shock absorbing member which are installed to an upper inner portion of an outer elevation guider according to one embodiment of the present invention.
FIG. 3 is a view schematically illustrating a shock absorbing spring which is installed to a lower inner portion of the outer elevation guider according to one embodiment of the present invention.
FIG. 4 is a view schematically illustrating an outer engaging part which is installed to the outside of an inner elevation part according to one embodiment of the present invention.
FIG. 5 is a perspective view illustrating the outer coupler according to one embodiment of the present invention.
FIG. 6 is a view schematically illustrating the outer elevation guider according to one embodiment of the present invention.
FIG. 7 is a view schematically illustrating the inner elevation part according to one embodiment of the present invention.
FIG. 8 is a cross-sectional view schematically illustrating an air discharge member according to one embodiment of the present invention.
FIG. 9 is a view schematically illustrating a connecting chain, upper and lower driving gears, and upper and lower couplers according to one embodiment of the present invention.
FIG. 10 is a view schematically illustrating a weight according to one embodiment of the present invention.
FIG. 11 is a view schematically illustrating a magnet member according to one embodiment of the present invention.
FIG. 12 is a view schematically illustrating a power generating apparatus according to another embodiment of the present invention.
FIGS. 13A and 13B are views schematically illustrating a generator and driving gears according to one embodiment of the present invention.
FIG. 14 is a view schematically illustrating a connecting relation of first and second air expanding members between two outer elevation guiders according to one embodiment of the present invention.

### DETAILED DESCRIPTION OF THE PREFERRED EMBODIMENT

Hereinafter, preferred embodiments of the present invention will be explained in detail in conjunction with the accompanying drawings so that those skilled in the art can easily carry out the present invention.

The embodiments of the present invention are intended to be illustrative only. Numerous alternative embodiments may be devised by those skilled in the art without departing from the scope of the following claims.

In the following description, detailed descriptions of well-known functions or constructions will be omitted since they would obscure the invention in unnecessary detail. The same or equivalent components, members and processes shown in Figures are given the identical reference numerals and the repeated description thereof will be omitted as appropriate.

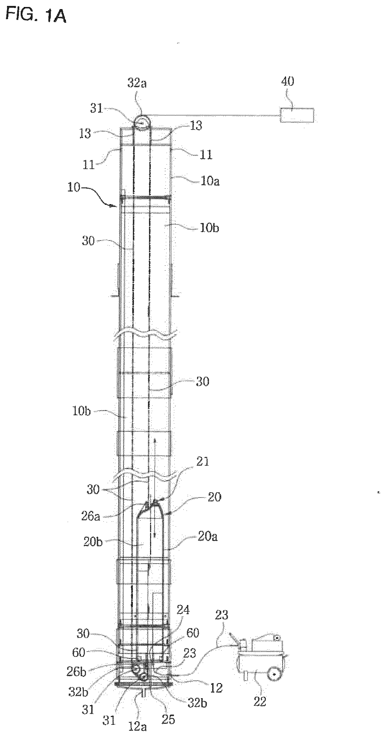

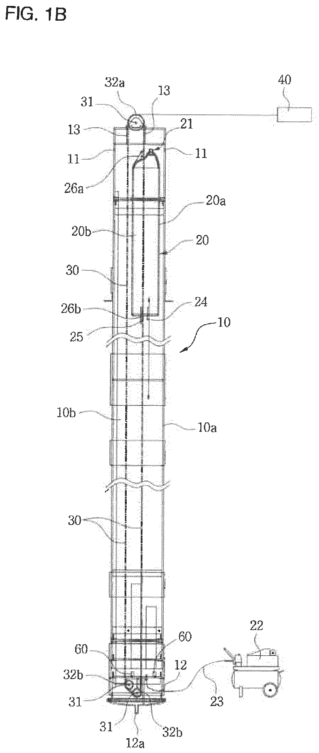

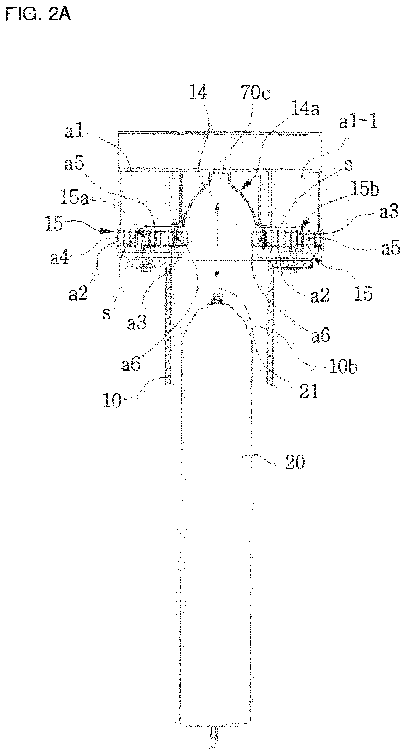

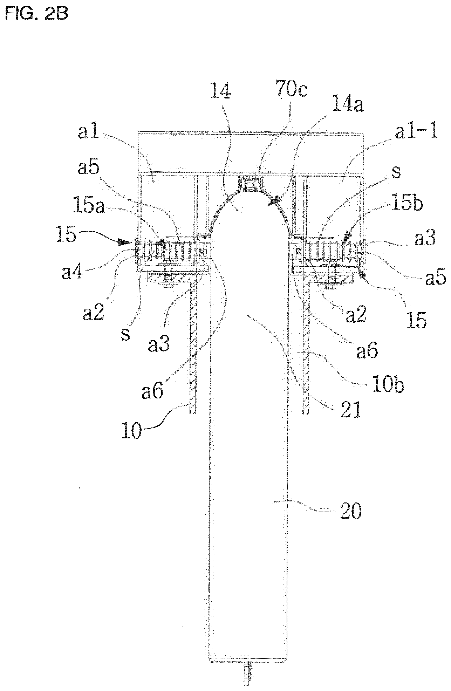

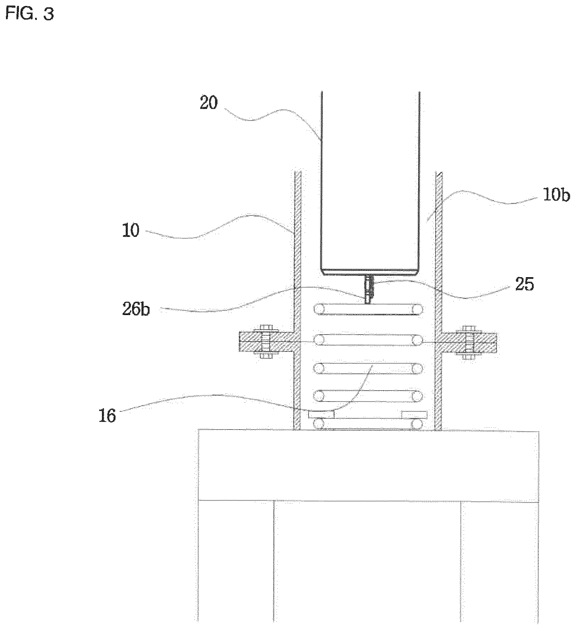

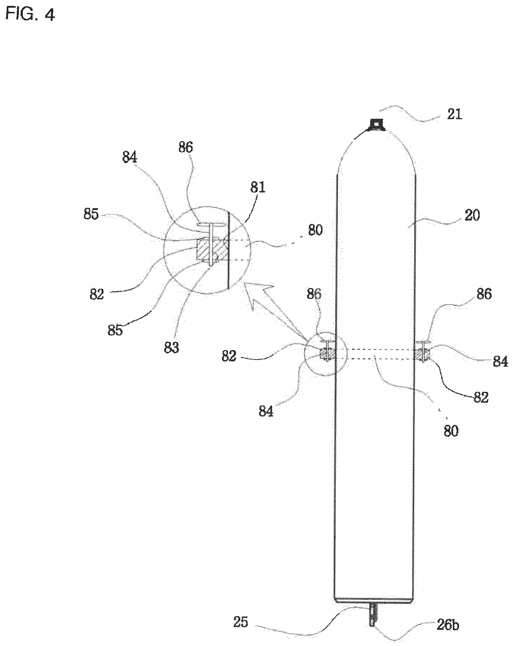

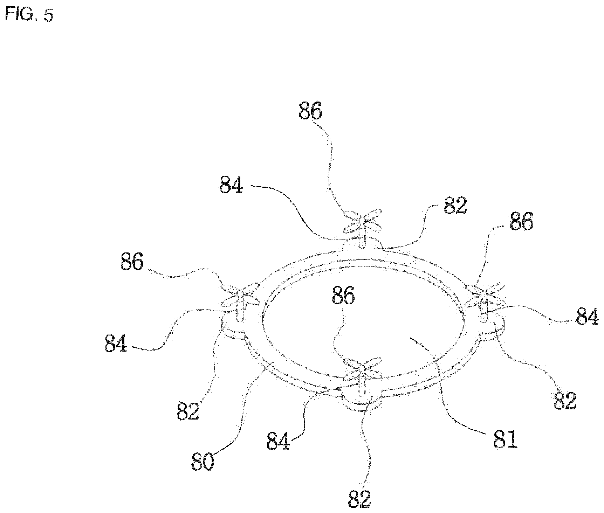

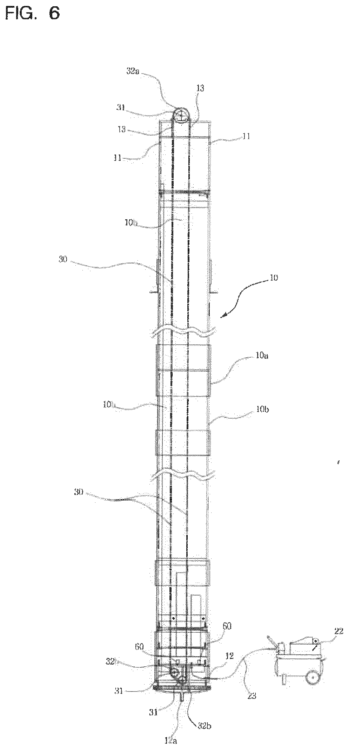

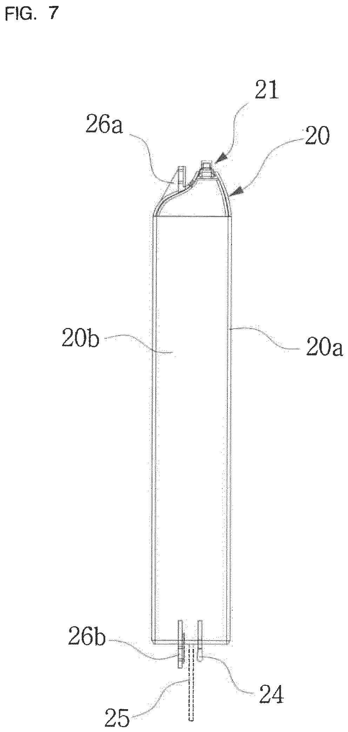

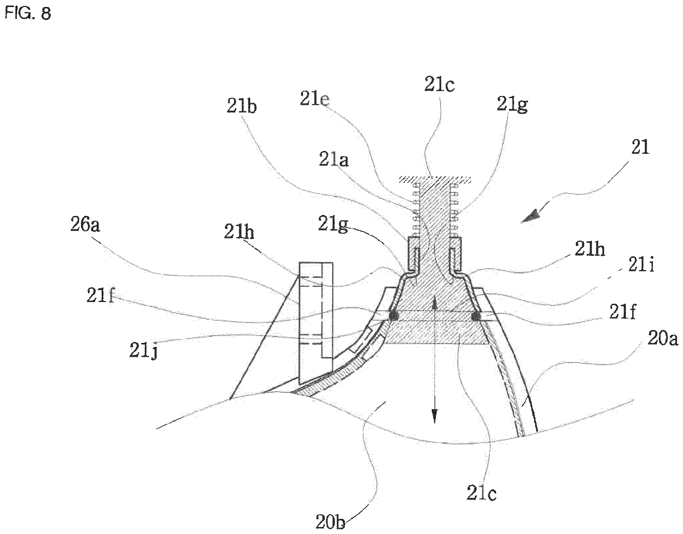

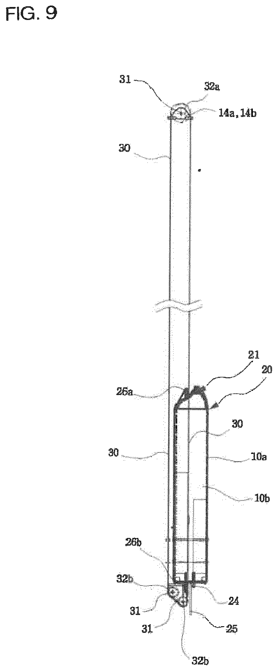

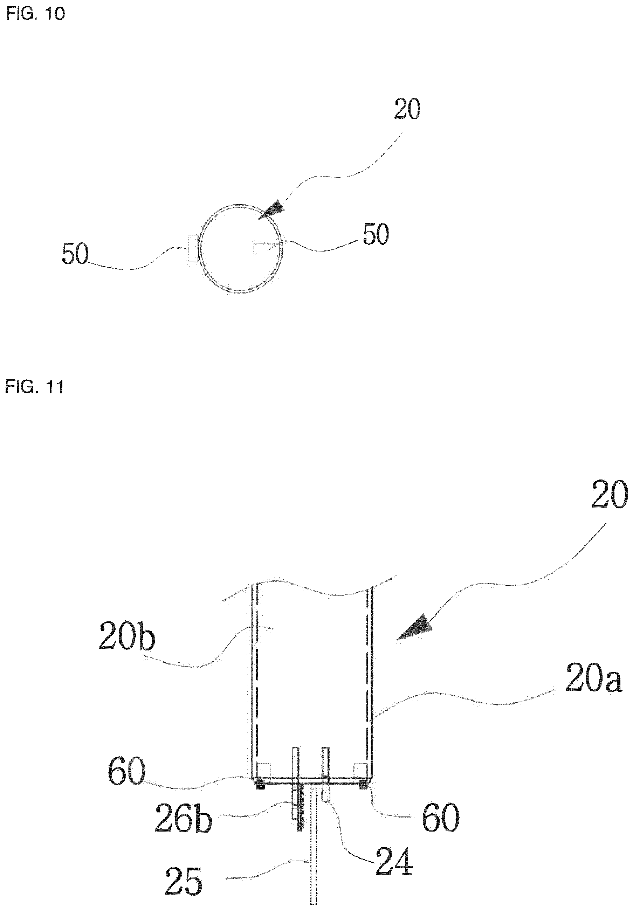

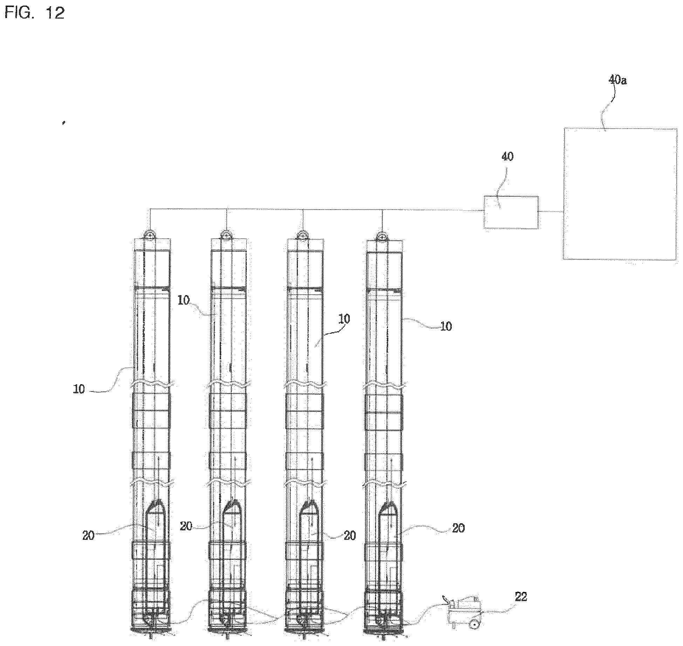

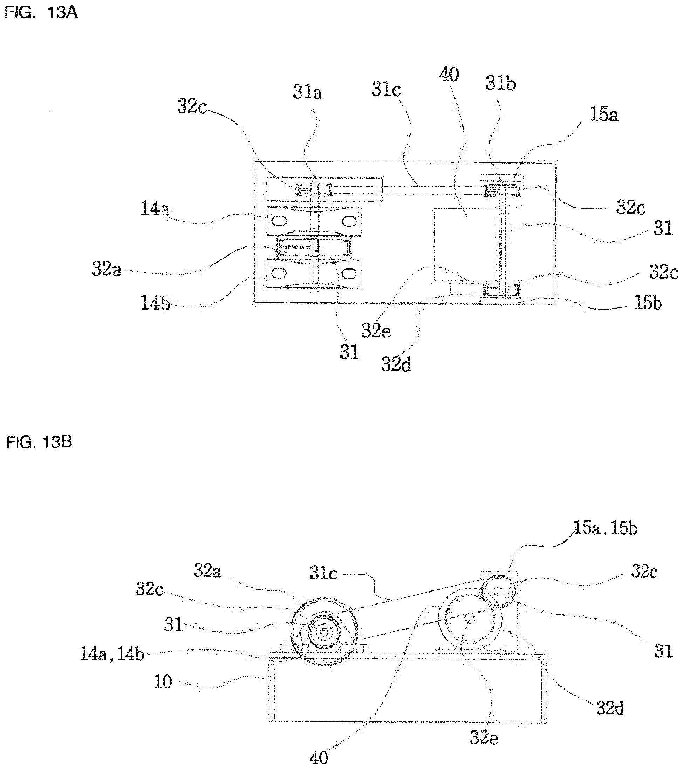

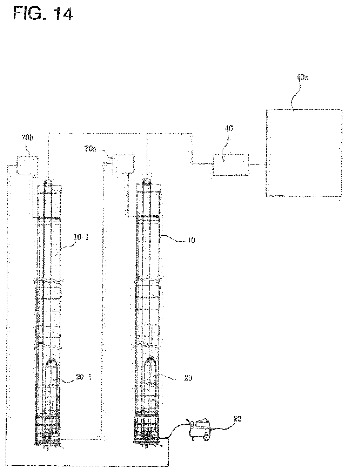

FIGS. 1A and 1B are views schematically illustrating a power generating apparatus according to one embodiment of the present invention. FIGS. 2A and 2B are views illustrating the operation of a stopper member and a shock absorbing member which are installed to an upper inner portion of an outer elevation guider according to one embodiment of the present invention. FIG. 3 is a view schematically illustrating a shock absorbing spring which is installed to a lower inner portion of the outer elevation guider according to one embodiment of the present invention. FIG. 4 is a view schematically illustrating an outer engaging part which is installed to the outside of an inner elevation part according to one embodiment of the present invention. FIG. 5 is a perspective view illustrating the outer coupler according to one embodiment of the present invention. FIG. 6 is a view schematically illustrating the outer elevation guider according to one embodiment of the present invention. FIG. 7 is a view schematically illustrating the inner elevation part according to one embodiment of the present invention. FIG. 8 is a cross-sectional view schematically illustrating an air discharge member according to one embodiment of the present invention. FIG. 9 is a view schematically illustrating a connecting chain, upper and lower driving gears, and upper and lower couplers according to one embodiment of the present invention. FIG. 10 is a view schematically illustrating a weight according to one embodiment of the present invention. FIG. 11 is a view schematically illustrating a magnet member according to one embodiment of the present invention. FIG. 12 is a view schematically illustrating a power generating apparatus according to another embodiment of the present invention. FIGS. 13A and 13B are views schematically illustrating a generator and driving gears according to one embodiment of the present invention. FIG. 14 is a view schematically illustrating a connecting relation of first and second air expanding members between two outer elevation guiders according to one embodiment of the present invention.

The power generating apparatus having a shock absorbing member provided to an outer elevation guider and driven by a combination of gravity and buoyancy according to one embodiment of the present invention will be described in detail with reference to FIGS. 1A and 14.

The power generating apparatus driven by the combination of the gravity and the buoyancy according to one embodiment of the present invention generally includes an outer elevation guider 10, a stopper member 14 installed to an upper portion of the outer elevation guider 10, shock absorbing members 15 installed to both sides of the stopper member 14, a shock absorbing spring 16 installed to a lower portion of the outer elevation guider, an inner elevation part 20, a coupling chain 30, and a generator 40.

The outer elevation guider 10 has a body 10a of which upper and lower portions are closed, and there is a receiving space 10b to be filled with water.

The body 10a has a desired length in a longitudinal direction.

The receiving space 10b of the body 10a is filled with the water, and the inner elevation part 20 is moved up and down in the water.

The upper portion of the body 10a is provided with a plurality of air outlet holes 11 to discharge the air when the inner elevation part 20 is moved up.

The lower portion of the body 10a is provided with an air inlet port 12.

A coupling hose 23 which is connected to a compressor 22 installed to the outside is inserted into the air inlet port 12, and is positioned in the receiving space 10b. The coupling hose 23 is connected to an air inlet port 24 of the inner elevation part 20 which is installed in the body 10a.

Water tightness is secured between an inner peripheral portion of the air inlet port 12 and an outer peripheral surface of the coupling hose 23.

The bottom surface of the body 10a is provided with a water feeding port 12a, through which the water flows in or out.

The outer elevation guider 10 is preferably made of metal, but the present invention is not limited thereto.

The stopper member 14 is installed to the upper portion of the body 10a, and is provided with a lower seating groove 14a so that an upper portion of the inner elevation part 20 is seated thereon.

The reason why the stopper member 14 is provided with the lower seating groove 14a to receive the upper portion of the inner elevation part 20 is that an air discharge member 21 installed to the upper portion of the inner elevation part 20 which is moved by buoyancy of compressed air in the outer elevation guider 10 filled with the water therein is stably fitted into the lower seating groove 14a of the stopper member 14, thereby preventing the inner elevation part 20 from being further moved up in the upper portion of the outer elevation guider 10. Therefore, it is possible to prevent the inner elevation part 20 from being further moved up in the upper portion of the outer elevation guider 10, so that the stable elevation of the inner elevation part 20 can be guided in the outer elevation guider 10, thereby preventing the upper portion of the inner elevation part 20 moved up and down in the outer elevation guider 10 from being worn and deformed for a long time, without replacing the damaged inner elevation part.

The shock absorbing member 15 is installed to the lower portion of the stopper member 14.

The shock absorbing member 15 includes a plurality of first and second shock absorbers 15a and 15b.

The first shock absorber 15a has a left vertical support a1 vertically installed to a left side of the body 10a, as illustrated in FIG. 2.

A left support portion a2 is horizontally installed to a left side of the left vertical support a1.

A right support portion a3 is installed to a right side of the left vertical support a1 at a distance away from the left support portion a2.

A piston a4 is installed to a right side of the left support portion a2, with a left side of the piston being fixed.

The piston a4 is inserted in a cylinder a5, and a right side of the cylinder is fixed to the left side of the right support portion a3.

A support spring s is interposed between the left support portion a2 and the right support portion a3.

A shock damper a6 is installed to the right side of the right support portion a3.

The second shock absorber 15b has a right vertical support a1-1 vertically installed to a right side of the body 10a.

A right support portion a3 is horizontally installed to a right side of the right vertical support a1-1.

A left support portion a2 is installed to a left side of the right vertical support a1-1 at a distance away from the right support portion a3.

A piston a4 is installed to a left side of the right support portion a3, with a right side of the piston being fixed.

The piston a4 is inserted in the cylinder a5, and a left side of the cylinder is fixed to the right side of the left support portion a2.

A support spring s is interposed between the right support portion a3 and the left support portion a2.

A shock damper a6 is installed to the left side of the left support portion a2.

When the inner elevation part 20 moved by the combination of the gravity and the buoyancy of the air is moved from the lower portion of the receiving space 10b formed in the outer elevation guider 10 to the upper portion of the receiving space, as illustrated in FIG. 3B, the first and second shock absorbers 15a and 15b installed to both sides of the inner elevation part 20 absorb the ascending shock caused by ascending movement of the inner elevation part 20.

If the shock damper a6 installed to the right support portion a3 of the first shock absorber 15a and the shock damper a6 installed to the left support portion a2 of the second shock absorber 15b abut against both upper portions of the ascending inner elevation part 20, the shock damper a6 installed to the right support portion a3 of the first shock absorber 15a moves toward the piston a4 in the cylinder a5 connected to the right support portion a3, so that the support spring s interposed between the right support portion a3 and the left support portion a2 is compressed to absorb the ascending shock and an ascending reaction force applied to the left side of the inner elevation part 20. Also, the shock damper a6 installed to the left support portion a2 of the second shock absorber 15b moves toward the piston a4 in the cylinder a5 connected to the left support portion a2, so that the support spring s interposed between the left support portion a2 and the right support portion a3 is compressed to absorb the ascending shock and an ascending reaction force applied to the right side of the inner elevation part 20.

As described above, the reason why the shock the shock absorbing member 15 includes the plurality of first and second shock absorbers 15a and 15b is that the stopper member 14 is installed to the upper portion of the outer elevation guider 10, and the first and second shock absorbs 15a and 15b are installed to both sides of the stopper member 14, to reduce the repulsive force generated when the inner elevation part 20 is moved up by the buoyancy of the air and then the upper portion thereof abuts against the inner upper surface of the receiving space 10b formed in the outer elevation guider 10. Also, the noise generated when the air discharge member 21 having a lifting member 21c which is resiliently supported by a resilient spring 21e provided in an opening 21a which is formed in the upper portion of the inner elevation part 20 repeatedly abuts against the inner upper surface of the receiving space 10b can be reduced by the resilient force of the resilient spring 21e, as well as preventing the damage of the stopper member 14 and the air discharge member 21 provided to the upper portion of the inner elevation part 20. Therefore, since it is not necessary to replace the air discharge member 21 of the inner elevation part 20, which is damaged by the abutment of the air discharge member 21 against the upper surface of the receiving space 10b, from the upper portion of the inner elevation part 20, a cost required for replacing the air discharge member 21 and the stopper member 14 can be decreased.

The vertical movement of the inner elevation part 20 is stably guided by the outer elevation guider 10 to prevent wearing, deformation and damage of the air discharge member 21 installed to the upper portion of the inner elevation part 20 repeatedly moved up and down in the outer elevation guider 10 which does not need to replace it.

The shock absorbing spring 16 is installed to the inner bottom surface of the body 10a of the outer elevation guider 10.

The reason why the shock absorbing spring 16 is installed to the inner bottom surface of the body 10a is that in the process of repeatedly moving the inner elevation part 20 up and down in the receiving space 10b of the outer elevation guider 10, the bottom surface of the inner elevation part 20 having the air inlet port 24 and a shock sensor 25 provided to the bottom surface abuts against the bottom surface of the receiving space 10b, and thus the shock absorbing spring 16 prevents the damage of the bottom surface of the inner elevation part 20, the air inlet port 24 and the shock sensor 25, thereby decreasing the maintenance cost of the bottom surface of the receiving space 10b, and thus the shock absorbing spring 16, and reducing the noise generated when the bottom surface of the inner elevation part 20, which is moved up and down in the receiving space 10b of the outer elevation guider 10, abuts against the bottom surface of the receiving space 10b.

A plurality of outer elevation guiders 10 according to one embodiment of the present invention are installed, and the inner elevation parts 20 are repeatedly moved up and down in the outer elevation guiders 20 filled with the water, thereby converting kinetic energy generated by the vertical movement of the inner elevation parts 20 into rotational energy by upper and lower driving gears 32a and 32b, a driving gear 32c, a front driving gear 32d, a driving shaft 32e, the coupling chain 30 and a coupling member 31c to transfer it to the generator 40 which continuously and stably generates electric energy.

A first air expanding member 70a is connected to the air outlet ports 70c provided to the stopper member 14 which is installed to the upper portion of the outer elevation guider 10, and is also connected to the air inlet port 12 formed in the lower portion of the other outer elevation guider 10-1. Also, a second air expanding member 70b is connected to the air outlet ports 70c formed in the upper portion of the other elevation guider 10-1, and is also connected to the air inlet port 12 formed in the lower portion of the outer elevation guider 10.

The first air expanding member 70a is connected to the air outlet ports 70c formed in the upper portion of the outer elevation guider 10.

Also, the first air expanding member 70a is connected to the air inlet port 12 formed in the lower portion of the other outer elevation guider 10-1.

The second air expanding member 70b is connected to the air outlet ports 70c formed in the upper portion of the other elevation guider 10-1.

Also, the second air expanding member 70b is connected to the air inlet port 12 formed in the lower portion of the outer elevation guider 10.

The reason why the first air expanding member 70a connected to the air outlet ports 70c formed in the upper portion of the outer elevation guider 10 is connected to the air inlet port 12 formed in the lower portion of the other outer elevation guider 10-1, and the second air expanding member 70b connected to the air outlet ports 70c formed in the upper portion of the other elevation guider 10-1 is connected to the air inlet port 12 formed in the lower portion of the outer elevation guider 10 is that when the inner elevation part 20 is moved up in the receiving space 10b formed in the outer elevation guider 10 and then abuts against the stopper member 14 installed to the upper portion of the outer elevation guider 10 to discharge the air filled in the inner elevation part 20 through the air discharge member 21, the discharged air is fed to the first air expanding member 70a through the air outlet ports 70c, and then pressurized air is stored in the first and second air expanding members 70a and 70b. The pressurized air is fed to the inner elevation part 20, and is quickly filled in the inner elevation part 20, so that the inner elevation part 20 is moved up in the outer elevation guider 10-1. And then, the air pressure generated by the inner elevation part 20 which is moved up in the outer elevation guider 10-1 is supplied to the second air expanding member 70b, and the pressurized air is fed to the inner elevation part 20 from the second air expanding member 70b to quickly fill the inner elevation part 20 with the air, so that the frequency per hour of the inner elevation part 20 which is moved up and down in the outer elevation guider 10 is increased, thereby effectively generating the electric energy by the inner elevation part 20 reciprocating in the outer elevation guider 10.

A plurality of outer elevation guiders 10 having the second air expanding member may be provided.

The inner elevation part 20 has an inner body 20a which is immersed into the water filled in the body 10a and is filled with air therein to be floated by the buoyancy.

The inner body 20a has a space 20b to be filled with the air.

The inner elevation part 20 is preferably made of metal, but the present invention is not limited thereto.

The air discharge member 21 is installed to an upper portion of the inner body 20a to discharge the air generated when the inner body abuts against the upper inner surface of the body 10a.

The air discharge member 21 has an opening 21a formed in the inner body 20a, as illustrated in FIG. 9.

An engaging cap 21b with a female threaded portion is engaged to a male threaded portion formed on an outer peripheral surface of the opening 21a.

The lifting member 21c is fitted in the opening 21a in such a way that a lower portion of the lifting member can come in and out.

The resilient spring 21e is installed on the outer peripheral surface of the lower portion of a flange 21d which is provided on the upper portion of the lifting member 21c, and the upper portion of the engaging cap 21b.

The lifting member 21c is provided with a plurality of vent holes 21f at a position corresponding to the outer peripheral surface of the lower portion thereof, and a middle portion of the lifting member 21c is provided with a locking portion 21h which is locked to a stepped portion 21g formed on the lower portion of the opening 21a. The vent holes 21f are closed by a receiving groove 21i formed on the lower portion of the lifting member 21c and an O-ring 21j fitted in the receiving groove 21i.

The coupling hose 23 is connected to the air inlet port 12 to be water tight, extends in the body 10a, and is connected to the compressor 22. Also, the coupling hose 23 is connected to the air inlet port 24 formed in the lower portion of the inner body 20a, so that the air inlet port 24 is supplied with the compressed air from the compressor 22 through the coupling hose 23.

The shock sensor 25 is installed to the lower portion of the inner body 20a adjacent to the air inlet port 24.

Specifically, if the air is discharged from the inner elevation part 20, the inner elevation part 20 is moved down in the outer elevation guider filled with the water due to its gravity. When the outer elevation guider 10 abuts against the lower surface of the receiving space 10b, the compressor 22 is operated by a sensing signal outputted from the shock sensor 25, and then the compressed air is fed to the air inlet port 24 of the inner elevation part 20 through the coupling hose 23 which is connected to the compressor 22, thereby filling the inner elevation part 20 provided with the air inlet port 24 with the compressed air.

The inner elevation part 20 filled with the compressed air is moved up in the outer elevation guider 10 filled with the water due to the buoyancy created in the inner elevation part, and thus the air is discharged to the upper surface of the body 10a of the outer elevation guider 10 through the air discharge member 21 installed to the upper portion of the inner elevation part 20, so that the inner elevation part 20 is again moved down in the body 10a.

Therefore, the inner elevation part 20 is repeatedly moved up and down in the outer elevation guider 10 filled with the water.

In the generator 40 which is operated by a combination of the driving shaft 31, the upper and lower driving gears 32a and 32b and the driving gear 32c which are connected by the coupling chain 30 driven when the inner elevation part 20 is moved up and down, the kinetic energy of the inner elevation part 20 is converted into the rotational energy by the combination of the driving shaft 31, the upper and lower driving gears 32a and 32b and the driving gear 32c, and then the rotational energy is transferred to the generator 40 to generate the electric energy.

An outer engaging member 80 with a receiving opening 81 is fitted on an outer peripheral surface of the inner elevation part 20.

The outer engaging member 80 is provided with a plurality of outer wings 82 on an outer peripheral surface thereof.

A rotational shaft 84 is rotatably engaged to an assembling hole 83 which is formed in the respective outer wings 82.

Bearings 85 are installed to upper and lower portions of the rotational shaft 84 to prevent the rotation shaft from being released from the assembling hole 83.

A propeller 86 is installed to the upper portion of the rotational shaft 84.

The reason why the outer engaging member 80 is engaged to the outer peripheral surface of the inner elevation part 20, the rotational shaft 84 is installed to the respective outer wings 82 formed on an outer peripheral surface of the outer engaging member, and the propeller 86 is installed to the upper portion of the rotational shaft 84 is that when the inner elevation part 20 is moved up in the receiving space 10b of the outer elevation guider 10, an ascending force is added to the inner elevation part 20 in the receiving space 10b by the rotation force of the propellers 86 provided to the inner elevation part 20, and that when the inner elevation part 20 is moved down in the receiving space 10b of the outer elevation guider 10, a descending force is added to the inner elevation part 20 in the receiving space 10b by the rotation force of the propellers 86 provided to the inner elevation part 20. Therefore, since the ascending force is generated by the propellers 86 in the receiving space 10b, the inner elevation part 20 is strongly moved up and down in the receiving space 10b, so that the generator 40 can effectively generate the electric energy.

Specifically, a plurality of outer engaging members 80 are installed to the outer peripheral surface of the inner elevation part 20 in a vertical direction, and the ascending force generated by a plurality of propellers 86 is applied to the inner elevation part 20 in the receiving space 10b, so that the inner elevation part 20 is strongly moved up and down in the receiving space 10b, and thus the generator 40 can effectively generate the electric energy.

The upper portion of the coupling chain 30 is connected to an upper connecting portion 26a provided on the upper portion of the inner elevation part 20, and a lower portion thereof is connected to a lower connecting portion 26b provided on the lower portion of the inner elevation part 20.

The coupling chain 30 passes around the plurality of upper driving gears 32a driven by the driving shaft 31 which is installed to the upper portion of the body 10a of the outer elevation guider 10, and the plurality of lower driving gears 32b driven by the driving shaft 31 which is installed to the lower portion of the body 10a.

The lower driving gears 32b are installed to the plurality of driving shafts 31 fixed to the lower portion of the body 10a, and are coupled to the upper driving gears 32a via the coupling chain 30.

The upper driving gears 32a are installed to the driving shaft 31 which penetrates the plurality of lower seating grooves 14a and 14b formed around an installation hole 13 formed in the upper portion of the inner elevation part 20.

The driving gear 32c is installed to a rear extending shaft 31a extending from the rear portion of the driving shaft 31 which is provided with the upper driving gears 32a, and the plurality of first and second shock absorbers 15a and 15b are installed to the other side of the upper driving gear 32a at regular intervals. The driving shaft 31 penetrates the first and second shock absorbers 15a and 15b, and the driving gear 32c is installed to the driving shaft 31 between the first and second shock absorbers 15a and 15b.

The driving gear 32c installed to the rear extending shaft 31a is connected to the driving gear 32c installed to the front extending shaft 31b via the coupling member 31c.

The front driving gear 32d installed to the front extending shaft 31b forwardly extending from the driving shaft 31, and the driving shaft 32e of the generator 40 which is installed to the lower portion of the front driving gear 32d in front of the first and second shock absorbers 15a and 15b are connected to the driving gear 32c.

The generator 40 is installed to the upper portion of the body 10a in such a way that the generator operates in combination with the upper driving gears 32a and the driving gears 32c provided to the upper portion of the body 10a.

Also, the generator 40 is connected to a battery 40a.

The weight 50 is installed to the inner and outer sides of the inner body 20a of the inner elevation part 20. The plurality of weights 50 are preferably provided, but the present invention is not limited to the number of the weights 50.

The weight 50 is to assist the inner elevation part 20 in moving down in the outer elevation guider 10 filled with the water.

A magnet member 60 is installed to the inner side of the lower portion of the inner body 20a. The plurality of magnet members 60 are preferably installed to the inside of the inner body 20a, but the present invention is not limited to the number of the magnet members 60.

The magnet members 60 are to prevent the inner elevation part 20 from being early moved up in the outer elevation guider 10 filled with the water before the inner elevation part 20 moved down in the outer elevation guider 10 is fully filled with the air.

The magnet members 60 are attached to the lower portion of the inner surface of the outer elevation guider 10, and if the inner elevation part 20 is fully filled with the compressed air, the inner elevation part 20 is moved up in the outer elevation guider 10 filled with the water by the buoyancy generated in the inner elevation part 20. In this instance, if the inner elevation part 20 is filled with the compressed air to generate the buoyancy, the magnet members 60 installed to the inner elevation part 20 are automatically detached from the bottom surface of the outer elevation guider 10.

Alternatively, a solar power generator or a wind power generator may be installed to the power generating apparatus according to the present invention to supply the electricity to the compressor.

According to the power generating apparatus driven by the combination of the gravity and the buoyancy which continuously and stably generates the electric energy by converting the kinetic energy into the rotational energy and transferring it to the generator, the stopper member 14 is installed to the upper portion of the outer elevation guider 10, the shock absorbing member 15 is installed to both sides of the stopper member, and the shock absorbing spring 16 is installed to the lower portion of the outer elevation guider 10. Therefore, the upper portion of the inner elevation part 20 which is moved up by the buoyancy of the compressed air is stably fitted into the stopper member 14, and the repulsive force caused by the ascending upper portion of the inner elevation part 20 is absorbed by the shock absorbing member 15 installed to the both sides of the stopper member 14, thereby preventing the inner elevation part 20 from being worn, damaged or deformed due to the repeated abutment of the air discharge member 21 installed to the upper portion of the inner elevation part 20 against the top surface of the receiving space 10b of the outer elevator guider 10 for a long time. Therefore, the stable elevation of the inner elevation part 20 can be guided in the outer elevation guider 10, thereby preventing the upper portion of the inner elevation part 20 and the air discharge member installed to the upper portion thereof, which are moved up and down in the outer elevation guider 10, from being worn, damaged and deformed for a long time, without replacing the damaged inner elevation part. Also, the shock absorbing spring 16 is installed to the inner lower portion of the outer elevation guider 10 to prevent the lower portion of the inner elevation part 20 from being damaged. Therefore, it is possible to use the inner elevation part 20 in the outer elevation guider 10 for a long time, without being replaced.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A power generating apparatus driven by a combination of gravity and buoyancy, the power generating apparatus comprising:
an outer elevation guider (10) including a body (10a) filled with water therein and extending a longitudinal direction, a plurality of air outlet ports (11) provided in an upper portion of the body (10a), an air inlet port (12) provided in a lower portion of the body (10a), a wafer feeing port (12a) formed in a bottom surface of the body (10a), a stopper member (14) installed to a top surface of the body (10a), a shock absorbing member (15) installed to both sides of a lower portion of the stopper member (14), and a shock absorbing spring (16) installed to an inner bottom surface of the body (10a);
an inner elevation part (20) including an inner body (20a) which is immersed into the water filled in the body (10a) and is filled with air therein to be floated by the buoyancy, an air discharge member (21) which is installed to an upper portion of the inner body (20a) to discharge air generated when the inner body abuts against an upper inner surface of the body (10a), a coupling hose (23) which is fitted in the air inlet port (12) in a water tightness manner, extends in the body (10a), and is connected to a compressor (22), an air inlet port (24) formed in a lower portion of the inner body (20a) to be connected to the coupling hose (23), and a shock sensor (25) installed to the lower portion of the inner body (20a);
a coupling chain (30) with an upper portion being connected to an upper connecting portion (26a) provided on an upper portion of the inner elevation part (20), and a lower portion being connected to a lower connecting portion (26b) provided on a lower portion of the inner elevation part (20), in which a plurality of upper driving gears (32a) are driven by a driving shaft (31) which is installed to the upper portion of the body (10a), and a plurality of lower driving gears (32b) are driven by a driving shaft (31) which is installed to the inner lower portion of the body (10a), with the coupling chain passing around the upper driving gears (32a) and the lower driving gears (32b); and
a generator (40) installed to the upper portion of the body (10a) and operating in cooperation with the upper driving gears (32a) and driving gears (32c) provided to the upper portion of the body (10a).

2. The power generating apparatus driven by the combination of gravity and buoyancy according to claim 1, wherein the stopper member (14) is provided with a lower seating groove (14a) and an air outlet port (70c) so that the upper portion of the inner elevation part (20) is seated thereon.

3. The power generating apparatus driven by the combination of gravity and buoyancy according to claim 1, wherein the shock absorbing member (15) includes a plurality of first and second shock absorbers (15a and 15b),
the first shock absorber (15a) has a left vertical support (a1) vertically installed to a left side of the body (10a), a left support portion (a2) horizontally installed to a left side of the left vertical support (a1), a right support portion (a3) installed to a right side of the left vertical support (a1) at a distance away from the left support portion (a2), a piston (a4) installed to a right side of the left support portion (a2), with a left side of the piston being fixed, a cylinder (a5) receiving the piston (a4), of which a right side of the cylinder is fixed to the left side of the right support portion (a3), a support spring (s) interposed between the left support portion (a2) and the right support portion (a3), and a shock damper (a6) installed to the right side of the right support portion (a3), and
the second shock absorber (15b) has a right vertical support (a1-1) vertically installed to a right side of the body (10a), a right support portion (a3) horizontally installed to a right side of the right vertical support (a1-1), a left support portion (a2) installed to a left side of the right vertical support (a1-1) at a distance away from the right support portion (a3), a piston (a4) installed to a left side of the right support portion (a3), with a right side of the piston being fixed, with piston (a4) being inserted in the cylinder (a5), and a left side of the cylinder being fixed to the right side of the left support portion (a2), a support spring (s) interposed between the right support portion (a3) and the left support portion (a2), and a shock damper (a6) installed to the left side of the left support portion (a2).

4. The power generating apparatus driven by the combination of gravity and buoyancy according to claim 1, wherein a plurality of weights (50) are installed to inner and outer sides of the inner body (20a) of the inner elevation part (20).

5. The power generating apparatus driven by the combination of gravity and buoyancy according to claim 1, wherein the air discharge member (21) includes an opening (21a) formed in the inner body (20a), an engaging cap (21b) with a female threaded portion which is engaged to a male threaded portion formed on an outer peripheral surface of the opening (21a), a lifting member (21c) fitted in the opening (21a) in such a way that a lower portion of the lifting member comes in and out, a resilient spring (21e) installed on an outer peripheral surface of the lower portion of a flange (21d) which is provided on an upper portion of the lifting member (21c), a plurality of vent holes (21f) provided to the lifting member (21c) at a position corresponding to an outer peripheral surface of a lower portion of the lifting member, a locking portion (21h) formed on a middle portion of the lifting member (21c) to be locked to a stepped portion (21g) which is formed on a lower portion of the opening (21a), a receiving groove (21i) formed on the lower portion of the lifting member (21c), and an O-ring (21j) fitted in the receiving groove (21i) to open or close the vent holes (21f).

6. The power generating apparatus driven by the combination of gravity and buoyancy according to claim 1, wherein a magnet member (60) is installed to the inner side of the lower portion of the inner body (20a).

7. The power generating apparatus driven by the combination of gravity and buoyancy according to claim 1, wherein a first air expanding member (70a) is connected to an air outlet port (70c) formed in the upper portion of the outer elevation guider (10), and is connected to the air inlet port (12) formed in the lower portion of the other outer elevation guider (10-1), and a second air expanding member (70b) is connected to the air outlet port (70c) formed in the upper portion of the other elevation guider (10-1), and is connected to the air inlet port (12) formed in the lower portion of the outer elevation guider (10).

8. The power generating apparatus driven by the combination of gravity and buoyancy according to claim 1, wherein an outer engaging member (80) with a receiving opening (81) is fitted on an outer peripheral surface of the inner elevation part (20), the outer engaging member (80) is provided with a plurality of outer wings (82) on an outer peripheral surface thereof, a rotational shaft (84) is rotatably engaged to an assembling hole (83) which is formed in the respective outer wings (82), bearings (85) are installed to upper and lower portions of the rotational shaft (84) to prevent the rotation shaft from being released from the assembling hole (83), and a propeller (86) is installed to the upper portion of the respective rotational shafts (84).
